# EUROPEAN PATENT SPECIFICATION

(11) **EP 2 064 386 B1**
(45) Date of publication and mention of the grant of the patent: **06.11.2013**
(21) Application number: 07804121.7
(22) Date of filing: 04.09.2007
(51) Int. Cl.: D06N 7/00, E04F 15/10, C09K 3/14, D06N 3/06, D06N 3/08, C09D 7/12

(54) **IMPROVED FLOOR COVERING**
VERBESSERTER BODENBELAG
REVÊTEMENT DE SOL AMÉLIORÉ

(30) Priority: 04.09.2006 GB 0617389
(43) Date of publication of application: 03.06.2009
(73) Proprietor: Altro Limited, Letchworth Garden City Hertfordshire SG6 1NW (GB)
(72) Inventor: PEACE, Richard, Hertfordshire SG6 1NW (GB)
(74) Representative: Foster, Simon
(86) International application number: PCT/GB2007/003315
(87) International publication number: WO 2008/029105

(56) References cited:
- WO-A-00/22225
- WO-A-03/012192
- WO-A-03/100162
- WO-A1-01/74951
- GB-A- 2 093 370

## Description

The present invention relates to a floor covering with improved slip resistance and appearance and to a method of manufacturing such a floor covering.

There is a demand from consumers of non-slip floor coverings for such floor coverings with an improved appearance.

A way of ameliorating this problem has been sought.

According to the present invention there is provided a slip-resistant plastics floor covering according to claim 1.

The advantages of the present invention include that the transparency of the inorganic particles improves the appearance of the floor covering, particularly where the floor covering has a design layer. This is because the inorganic particles are not usually visible to the user of the floor covering. This allows the particle to blend in when used on a patterned floor covering. In comparison, conventional non-slip particles are generally opaque and thus affect the appearance of the floor covering.

A further advantage of the particles used in the invention is that as the coating on the particles wears off in use, the particles do not become more visible because they are transparent. This had been a problem in the past when coloured opaque particles had been used, for example coloured silicon carbide particles.

In some aspects, the one or more particles are exposed at the upper surface of the first layer.

The one or more transparent coated inorganic particles used in the invention may be transparent or semi-transparent. The one or more particles may be coated with an adhesion coating and/or a tinted coating. An adhesion coating is a coating which enhances the adhesion between the one or more particles and the first layer of plastics material. An example of an adhesion coating is a silane, for example a silane coupling agent. A suitable silane is an optionally substituted straight or branched chain C₁₋₈-alkyl silane wherein a suitable substituent is preferably a halogen (e.g. fluorine or chlorine), hydroxyl or amino group. The silane coating may be applied in association with an alcohol e.g. a straight or branched chain C₁₋₈-alkyl alcohol.

A tinted coating may be a transparent or semi-transparent coloured coating. Such a coating can further reduce the visibility of the one or more particles whilst allowing any colouring of the floor covering to show through. A tinted coating may be an inorganic or a polymeric coating. A polymeric tinted coating may be a thermoset polymeric coating, for example an epoxy or polyurethane coating.

To coat the transparent inorganic particles with a transparent or semi-transparent organic coating, the following procedure is employed. The particles are mixed under low shear with the liquid coating. The particles are optionally pre-coated with a coupling agent to improve adhesion of the final coating. The organic coating can be a two component epoxy or alternatively it could be a water based or solvent based epoxy or a two part solvent based polyurethane or waterborne polyurethane or acrylic.

The application of frictional heat and/or externally applied heat reduces the viscosity of the coating system, allowing good coverage before the onset of curing which is accompanied by a rise in the viscosity. With a water based system, the water may first be removed at 100°C.

Full curing is achieved after the coating has fully hardened onto the inorganic particles and there is no evidence of residual coating liquid. The resulting product is then sieved to give correct particle size distribution. Particle agglomeration is avoided by optimising the ratio of coating material to inorganic particles and agitation by tumbling or stirring in a rotary action mixer.

To coat the transparent inorganic particles with a transparent or semi-transparent inorganic coating, the following procedure is employed. An inorganic pigmented coating such as vitreous enamel is fused onto the inorganic particle at a high temperature.

The transparent coated inorganic particle is a transparent coated aluminium oxide particle.

The transparent coated inorganic particle may have a particle size of from 0.1mm, particularly from 0.2mm, especially from 0.4mm to 1.5mm, particularly to 1.2mm, especially to 0.6mm. In some aspects, the transparent coated inorganic particle may have a size determined by F36 grade (FEPA Standard 42-GB-1984 measurement) of 0.4 to 0.6mm.

The flooring material according to the invention has an upper surface which is formed by the first layer of plastics material. The particulate layer is arranged such that substantially all (in some aspects all) of the particles are exposed at the upper surface of the floor covering. The particulate layer may be arranged such that the one or more particles penetrate the first layer of plastics material. This is in order that the one or more particles is embedded in the first layer such that they are hard to dislodge.

The plastics material used to form the first layer of plastics material may be substantially free from the particles which provide a slip-resistant effect. This is in order to reduce costs and to ensure that the upper surface of the first layer is uniform. A further advantage of having the first layer substantially free from the particles is that it improves the appearance of the first layer. This is particularly the case where the first layer is substantially transparent or clear. The first layer of plastics material may be free from a plasticizer.

The first layer of plastics material is optionally either a layer of substantially clear plastics material such that the layer is substantially translucent or substantially transparent or a layer of coloured plastics material.

The coating of the particles may be matched to the colour and/or appearance of the plastics material of the first layer. Where the first layer is a layer of substantially clear plastics material, the particles may be substantially clear and/or substantially translucent; where the first layer is a layer of coloured plastics material, the particles may be tinted to match the colour of the plastics material.

Substantially transparent particles used in the invention may have a refractive index within ± 0.2 of the clear coat layer.

Optionally the floor covering further includes an additive commonly used in the art such as a UV stabiliser, a biocide, and/or a flow aid such as fumed silica.

The first layer of plastics material is optionally either a coating layer or a base layer. Where the first layer is a coating layer, the floor covering additionally comprises at least one base layer; the particles may penetrate through the first layer to the base layer.

Where the first layer of plastics material is a coating layer, it may include a thermoplastic or a cross-linkable polymer or copolymer. For the cross-linkable polymer or copolymer, cross-linking may be effected by condensation or by a free radical route such as using UV radiation. It will be understood that a cross-linkable polymer used in the invention is generally a thermoset polymer. Examples of suitable polymers or copolymers include PvdF, a polyester, polyurethane, or acrylic polymer or copolymer, an epoxy resin, and/or an olefin/modified olefin copolymer. The coating layer may include an acrylic polymer. In some aspects, the coating layer may include a mixture of an acrylic polymer with PvdF. In some aspects, the coating layer is substantially free from a thermosetting polymer or co-polymer. This is because thermosetting polymers or copolymers may not be generally sufficiently fast curing or flexible enough to be useful in the coating layer of the floor covering.

A first layer or a base layer for use in the floor covering according to the invention may comprise a plastics material such as a thermoplastic polymer (for example a PVC, a polyurethane, and/or a plasticised acrylic polymer) or a thermoset polymer (for example a polyester, an acrylic, a polyurethane and/or an epoxypolymer). In some aspects, the plastics material is a PVC plastisol or a plasticised acrylic material.

The floor covering may include a reinforcing support; in some aspects, the support is a glass fibre reinforced non-woven support.

The floor covering may optionally comprise one or more additional base layers; in some aspects, up to three layers are envisaged.

The floor covering optionally includes a design layer. A design layer comprises a layer of ink or a printed film layer (the film is preferably formed from a plastics material such as PVC) which gives the floor covering an attractive appearance. In order that the design layer is visible, the first layer is substantially transparent when the floor covering includes a design layer. In some aspects, one or more substantially transparent base layers are optionally provided between the first layer and the design layer.

The floor covering may optionally further contain a decorative additive such as a quartz chip, a pigment, a stone chip (e.g. limestone, marble or granite) and/or a pigmented PVC chip. In some aspects, the floor covering is embossed. Where the plastics material is a thermoset polymer, the floor covering optionally includes an aggregate such as crushed glass, granite, flint, calcined flint, marble, quartz or another decorative stone and/or a further grit to provide slip resistance such as calcined flint, calcined bauxite, silicon carbide, aluminium oxide, transparent aluminium oxide and/or brown aluminium oxide. The particle size of the grit is from 0. 05mm to 1.5mm, especially to 1.0mm. In some aspects, the grit may have a range of particle sizes.

Where the plastics material is a thermoplastic polymer, the floor covering according to the invention optionally further comprises one or more additional particulate materials such as a glass bead or flake, crushed glass, white aluminium oxide, clear quartz, an alumina silicate, micaceous material (such as Mica), nylon powder, a nylon bead, a rubber particle, rubber powder, a polymeric powder, a polymeric bead, a ceramic material, a synthetic crystal, a fibre (such as a fibre of Nylon), titanium dioxide, wax and/or liquid rubber. In some aspects, the first layer and/or the floor covering according to the invention is substantially free from opaque particulate material.

A suitable plastisol paste for use as a plastics material in the present invention comprises about 100 parts of plastics material (e.g. PVC powder), from 30 to 70 parts of a plasticiser, from 0 to 100 parts of mineral filler, from 1 to 3 parts of a thermal stabiliser and from 0 to 6 parts of a pigment (where the parts are parts per hundred of resin).

According to the invention there is also provided a method of manufacturing a slip resistant floor covering according to claim 6.

The method of the invention may comprise a step of applying at least one base layer. In such a method, the first layer is a coating layer which is applied to an upper surface of the base layer. In some aspects, the steps of the method of the invention may be carried out sequentially. The step of applying the particulate layer may be carried out such that the particles are exposed on the upper surface of the layer.

The method of the invention may comprise a step of applying a design layer wherein the first layer of plastics material is substantially clear and is applied to an upper surface of the design layer. In some aspects, the method of the invention comprises steps of:
applying a base layer;
applying a design layer on an upper surface of the base layer; and
applying a first layer on an upper surface of the design layer. This method may comprise a step of applying one or more substantially transparent base layers on the upper surface of the design layer.

The invention will now be described with reference to the following Figures of the accompanying drawings which are not intended to limit the scope of the invention in which:
Figure 1 shows a schematic cross-section of a first embodiment of a floor covering according to the invention;
Figure 2 shows a schematic cross-section of a second embodiment of a floor covering according to the invention;
Figure 3 shows a schematic cross-section of a third embodiment of a floor covering according to the invention; and
Figure 4 shows a schematic cross-section of a fourth embodiment of a floor covering according to the invention.

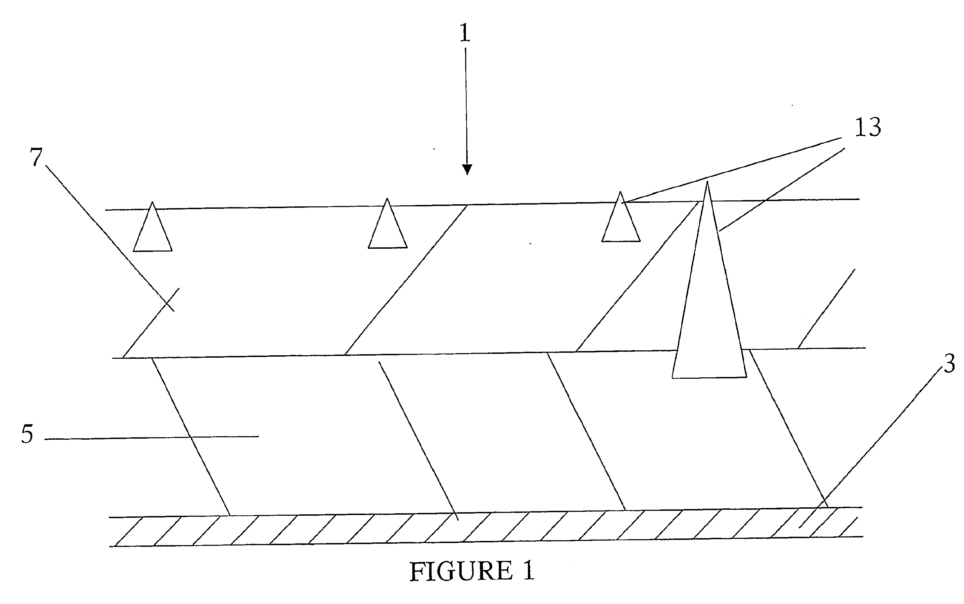

The first embodiment of a floor covering 1 illustrated in Figure 1 includes a substrate 3 which is a cellulose/polyester support reinforced with a 32 tex glass crennette. The substrate 3 is approximately 0.15mm in thickness. On top of the substrate 3 there is a PVC plastisol undercoat 5 which is approximately 1mm thick. On top of the undercoat 5 there is a layer 7 of PVC plastisol which is about 0.8mm thick. Embedded in and proud of the layer 7 and penetrating to undercoat 5 are transparent coated inorganic grits 13.

As an alternative to the embodiment depicted in Figure 1, the undercoat 5 and layer 7 may be provided as a single layer, glass beads and/or coloured PVC chips may be provided in layer 7, and/or further particulate material may be included such as aluminium oxide grits.

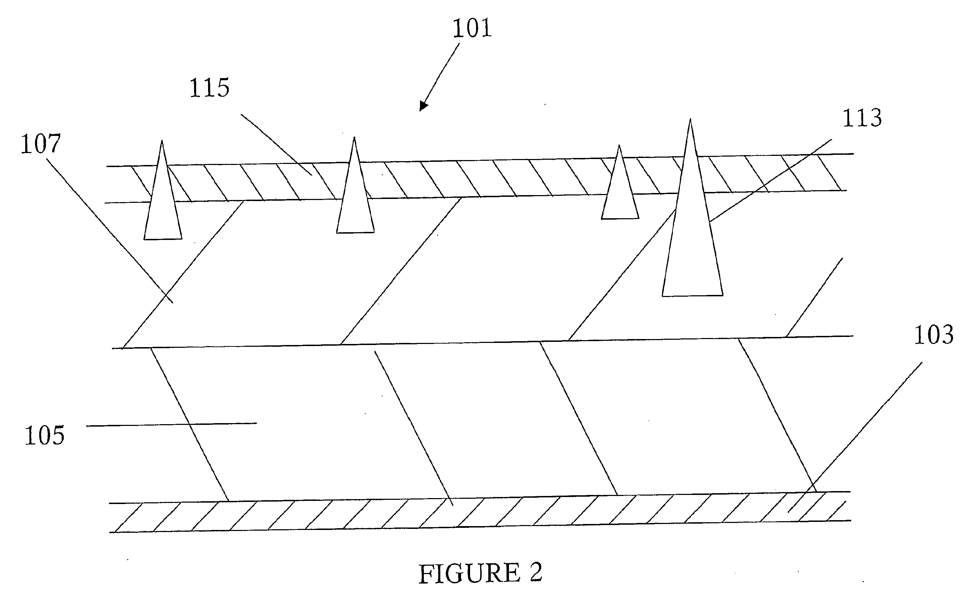

The second embodiment of a floor covering 101 illustrated in Figure 2 includes a substrate 103, undercoat 105 and a layer 107 of PVC plastisol as in the first embodiment. On top of the PVC plastisol layer 107, there is a barrier layer 115 of PVDF. Embedded in and proud of the barrier layer 115 and penetrating to the layer 107 are transparent coated inorganic grits 113.

As an alternative to the embodiment depicted in Figure 2, the undercoat 105 and layer 107 may be provided as a single layer, glass beads and/or coloured PVC chips may be provided in layer 107, further particulate material may be included such as aluminium oxide grits, and/or the barrier layer may be formed from a different material from PVDF such as another thermoplastic polymer or a cross-linkable polymer.

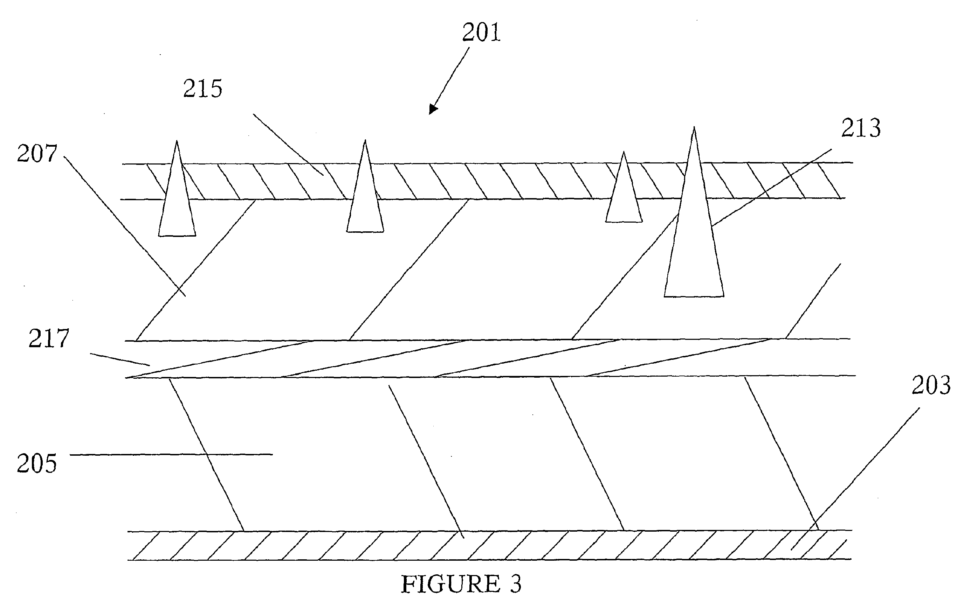

The third embodiment of a floor covering 201 illustrated in Figure 3 includes a substrate 203, a PVC plastisol undercoat 205. On top of the undercoat layer 205, there is a design layer 217 which comprises a layer of water-based ink applied by gravure printing. On top of the design layer is a layer 207 of PVC plastisol. On top of the PVC plastisol layer 207, there is a barrier layer 215 of PVDF. Embedded in and proud of the barrier layer 215 and penetrating to the layer 207 are transparent coated inorganic grits 213.

As an alternative to the embodiment depicted in Figure 3, the undercoat 205 and layer 207 may be provided as a single layer, glass beads and/or coloured PVC chips may be provided in layer 207, further particulate material may be included such as aluminium oxide grits, and/or the barrier layer may be formed from a different material from PVDF such as another thermoplastic polymer or a cross-linkable polymer.

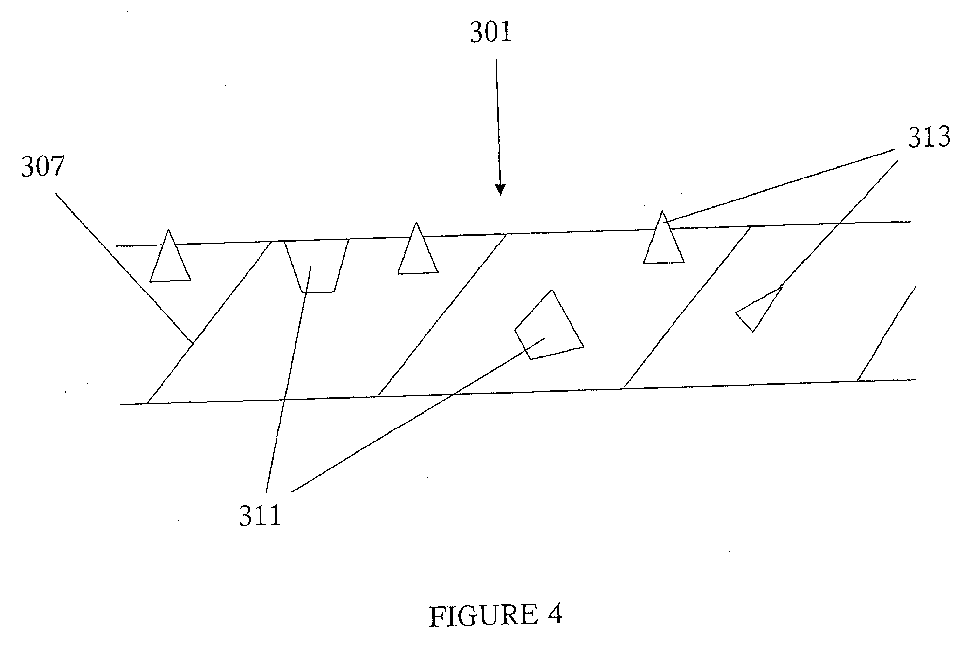

The fourth embodiment of a floor covering 301 illustrated in Figure 4 includes a resin layer 307. Resin layer 307 has embedded in it decorative marble chips 311. Embedded in and proud of resin layer 307 are transparent coated inorganic grits 213.

As an alternative to the embodiment depicted in Figure 3, the resin layer may be applied *in situ* to a substrate (not shown), decorative marble chips 311 may be omitted from layer 307, and/or further particulate material may be included.

The invention is further illustrated with reference to the following examples which are not intended to limit the scope of the invention claimed.

### PREPARATIVE EXAMPLE 1

In this Example, the method of preparing silane coated aluminium oxide particles is described.

Transparent aluminium oxide particles graded F36 (FEPA Standard 42-GB-1984 measurement) may be supplied by Bond Minerals and Polymers. Particles coated with a silane coupling agent improve adhesion of the particles to the first layer. The coupling agent solution can be added to the inorganic particles at 0.3 parts per hundred of inorganic particles and blended in a low shear rotary action mixer before force drying if necessary.

### Coupling agent formulation

| | Parts by weight |
|---|---|
| A1100 (gamma aminopropyl silane) | 50 |
| isopropyl alcohol (IPA) | 50 |

### PREPARATIVE EXAMPLE 2

In this Example, the method of preparing tinted aluminium oxide particles is described.

Silane coated aluminium oxide particles prepared as described in Preparative Example 1 or uncoated aluminium oxide particles may be used. A resin system may be added to dry particles to coat them whilst mixing. Mixing is continued until the coating is cured. The product is forced dry and post cured if necessary.

The resin is added at a rate of 120g per m² of inorganic particles surface area.

The following resin system formulations may be used:

### a) Solvent based epoxy

### Part A)

| | Parts by weight |
|---|---|
| 75% epoxy in xylene | 420 |
| Methyl isobutyl ketone | 150 |
| Xylene | 40 |
| n-butanol | 60 |
| pigment/filler | 330 |

### Part B)

| | |
|---|---|
| Isolated polyamine adduct solution | 245 |
| Xylene | 20 |
| Butanol | 5 |

### b) Water based epoxy

### Part A)

| | Parts by weight |
|---|---|
| Modified epoxy resin | 45 |
| Pigment | 16.5 |
| Barium sulphate) | 38.5 |

### Part B)

| | |
|---|---|
| Polyamine adduct in water | 40 |
| Water | 10 |

### c) Solvent free epoxy

### Part A)

| | Parts in weight |
|---|---|
| Modified epoxy resin | 42 |
| Pigment | 16 |
| Barium sulphate | 41.6 |
| Antifoam | 0.4 |

### Part B)

| | |
|---|---|
| A cycloaliphatic amine | 25 |

### d) Polyurethane

A two component polyurethane system comprising:
Part A): a branched polyalcohol; and
Part B): an aliphatic polyisocyanate;
optionally with the addition of accelerators and surfactants in component (a) and/or (b).

In each two part resin system the whole of part A is mixed with the whole of part B before application to the inorganic particles. Typically the particles are mixed with the two part resin system in a ribbon or other rotary low shear mixer for about 60 minutes after which time the coating on the inorganic particles should be hard enough to handle.

### PREPARATIVE EXAMPLE 3

Plastisols having the formulations given in Table 1 were produced as described below.

**TABLE 1**

| **Plastisol Formulations** | | |
|---|---|---|
| | A. Weight/kg | B. Weight/kg |
| PVC polymer | 15 | 20 |
| PVC polymer | 5 | - |
| Di-isodecyl phthalate | 6.5 | 6.5 |
| Calcium magnesium carbonate | - | 5 |
| Blend of aliphatic hydrocarbons with a neutral wetting and dispersing component | - | 0.4 |
| Liquid barium zinc preparation containing organic barium compounds | 0.3 | 0.4 |
| A solution of 10,10' oxybisphenoxyarsine in epoxidised soya bean oil | - | 0.2 |
| Black pigment provided as a dispersion of carbon black in a plasticiser | - | 0.02 |

In each case, the ingredients were weighed in to a 50 litre steel vessel and mixed by a trifoil shaft mixer at 100 rpm for 4 minutes and a dissolver shaft at 1800 rpm for 2 minutes. Aluminium oxide particles (from Washington Mills) size F40 (FEPA Standard 42-GB-1984 measurement) were weighed into plastisol B (10% w/w) and mixed.

### PREPARATIVE EXAMPLE 4

A thermoplastic powder coating C having the formulation shown in Table 2 was produced as described below.

**TABLE 2**

| Powder Coating Formulation C | |
|---|---|
| | Weight/kg |
| Poly(vinylidene)fluoride polymer | 10 |
| Methyl methacrylate/ethyl acrylate copolymer | 4.8 |
| Low melting point fluorine-based terpolymer | 1.1 |
| Antioxidant | 0.05 |

The ingredients were weighed and blended by being tumbled together. The blend was extruded in an extruder with the screw rotation set at 313 rpm, the barrel set at 200°C and the feed zone set at 30°C. The extrudate was collected in large containers (of dimensions: 380 mm x 305 mm x 75 mm) and allowed to cool slowly at ambient temperature for 8 hours. The resulting blocks were broken into smaller pieces by mechanical attrition. The material was then ground in an disc mill, using a single pass and no intermediate sieving screen. The temperature of the material prior to its introduction into the mill was -100°C; the mill was maintained at -35°C during grinding. 99% of the resulting powder was of a size of below 90 microns and the average powder size was 37µm.

### EXAMPLE 5

In this Example, the preparation of a floor covering as depicted in Figure 1 is described.

Plastisol B was spread coated onto a substrate to a thickness of 1mm by knife over roller. The substrate was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before it was over coated with plastisol A to a total thickness of 2mm by knife over bed.

Tinted transparent coated aluminium oxide particles having a first layer of polyurethane and a second layer of epoxy, prepared as described in Preparative Example 2 were then scattered onto the surface of the plastisol at a rate of 75 g/m². The system was then passed in to a convection oven where it was exposed to 190°C for 3 minutes before being embossed, cooled and wound up for subsequent trimming to size.

Comparative visual tests showed that the appearance of the floor covering prepared was not impaired by the addition of the anti-slip material. Indeed, when viewed at a distance of greater than about 1m, the aluminium oxide particles were not visible on the surface of the floor covering. The slip resistance of the floor covering was measured and was found to have a value recommended by the UK Slip Resistance Group guidelines as giving low potential to slip.

### EXAMPLE 7

In this Example, the preparation of a floor covering as depicted in Figure 2, where undercoat 105 and layer 107 are provided by a single layer, is described.

Plastisol A was spread coated on a substrate to a thickness of 2mm by knife over roller. The substrate was a 2m width cellulose/polyester support reinforced with a glass crennette moving at a rate of 3 metre/minute. Particles of coloured quartz of a size of 1.2-1.8mm were then scattered on to the surface of the plastisol at a rate of 500 g/m². The coated web was then passed under a 50 kW medium wave infra red heater (width 2.5 m; length 1 m). The heater was positioned at a height of 10cm above the web. The power output of the heater was adjusted so that the surface of the plastisol as it exited the infra red zone was fully solidified ('gelled') to the touch.

An acrylic based clear coating powder C, was then applied to the surface at a rate of 80 ± 30 g/m² using a scatter powder coating application system. Tinted transparent coated aluminium oxide particles having a first layer of polyurethane and a second layer of epoxy, prepared as described in Preparative Example 2 were then scattered on to the surface at the rate of 75 g/m². The system was then passed in to a convection oven where it was exposed to 190°C for 2 minutes before being embossed, cooled and wound up for subsequent trimming to size.

### EXAMPLE 8

In this Example, the preparation of a floor covering as depicted in Figure 3 is described.

Plastisol B was spread coated onto a substrate to a thickness of 1mm by knife over roller. The substrate was a 2 m width cellulose/polyester support reinforced with a glass crennette moving at a rate of 7 metres/minute. The system was then passed over a gel drum to partially cure and flatten the layer of plastisol.

A wood print PVC film having a thickness of 0.1mm was then laminated onto the system by the application of pressure to the hot surface of the gelled PVC.

Plastisol A was spread coated on the system to a thickness of 2mm by knife over roller. The coated web was then passed under a 50 kW medium wave infra red heater (width 2.5 m; length 1 m). The heater was positioned at a height of 10cm above the web. The power output of the heater was adjusted so that the surface of the plastisol as it exited the infra red zone was fully solidified ('gelled') to the touch.

An acrylic based clear coating powder C, was then applied to the surface at a rate of 80 ± 30 g/m² using a scatter powder coating application system. Tinted transparent coated aluminium oxide particles having a first layer of polyurethane and a second layer of epoxy, prepared as described in Preparative Example 2 were then scattered on to the surface at the rate of 75 g/m². The system was then passed in to a convection oven where it was exposed to 190°C for 2 minutes before being embossed, cooled and wound up for subsequent trimming to size.

### EXAMPLE 9

An epoxy resin having the components set out in Table 3 was prepared by mixing and then was cast into a tile-shaped mould.

**TABLE 3**

| Ingredient | Amount (parts by weight) |
|---|---|
| Epoxy resin | 100.0 |
| Isophorone diamine | 22.8 |
| Benzyl alcohol | 9.1 |
| Aluminium trihydrate | 409.0 |
| Aggregate having a particle size of 4-6mm | 637.0 |
| Aluminium oxide particles prepared according to Preparative Example 2 and having a size of 0.8mm | 150.0 |

The resulting cast tile was ground to expose the aggregate particles and to provide a flat profile. It was found that such tiles, despite exhibiting good slip resistance, can, when cleaned aggressively in service, become polished, thus reducing slip resistance. The inclusion of tinted transparent coated aluminium oxide particles having a high polished stone value within the epoxy matrix provides harder particles in the surface which do not become polished during cleaning and thus maintain slip resistance.

## Claims

1. A slip-resistant plastics floor covering having a first layer of plastics material which first layer of plastics material has on its upper surface a particulate layer of one or more transparent coated aluminium oxide particles which particulate layer imparts slip-resistance to the floor covering wherein the particle coating is transparent or semi-transparent and wherein the particle is transparent.

2. A floor covering as defined in Claim 1 wherein the one or more particles are exposed on the upper surface of the first layer.

3. A floor covering as defined in Claim 1 or Claim 2 wherein the one or more particles are coated with an adhesion coating and/or a tinted coating.

4. A floor covering as defined in any one of the preceding Claims wherein the first layer of plastics material is a layer of substantially clear plastics material, preferably the first layer is substantially transparent.

5. A floor covering as defined in any one of the preceding Claims which includes a design layer; preferably the floor covering comprises a clear and/or transparent first layer provided on a upper surface of a design layer which is provided on a upper surface of a base layer; and/or preferably one or more substantially transparent base layers are optionally provided between the first layer and the design layer.

6. A method of manufacturing a slip resistant floor covering which method comprises the steps of:
applying a first layer of plastics material;
applying a particulate layer of transparent coated aluminium oxide particles to an upper surface of the first layer; and
curing the plastics material such that it forms a continuous film;
wherein the particles provide a slip-resistant effect and wherein the particle coating is transparent or semi-transparent and wherein the particle is transparent.

7. A method as defined in Claim 6 wherein the plastics material used to form the first layer of plastics material is substantially free from polymeric particles which provide a slip-resistant effect.

8. A method as defined in Claim 6 or Claim 7 which comprises a step of applying at least one base layer wherein the first layer is a coating layer which is applied to an upper surface of the base layer.

9. A method as defined in Claim 8 wherein the coating layer includes a thermoplastic or a cross-linkable polymer or copolymer.

10. A method as defined in any one of Claims 6 to 9 wherein the first layer includes a plastics material such as a thermoplastic or thermoset polymer; preferably the first layer includes a PVC plastisol or a plasticised acrylic material.

11. A method as defined in any one of Claims 7 to 10 wherein the first layer of plastics material is a layer of substantially clear plastics material, preferably the first layer is substantially transparent.

12. A method as defined in Claim 11 which comprises a step of applying a design layer and wherein the first layer of substantially clear plastics material is applied to an upper surface of the design layer; preferably the method comprises steps of:
applying a base layer;
applying a design layer on an upper surface of the base layer; and
applying a first layer on an upper surface of the design layer.

13. A method as defined in Claim 12 which comprises a step of applying one or more substantially transparent base layers on the upper surface of the design layer.

14. A method as defined in any one of Claims 6 to 13 wherein the steps are carried out sequentially.

## Patentansprüche

1. Rutschfeste Kunststoff-Fußbodenauflage mit einer ersten Lage aus Kunststoffmaterial, wobei die erste Lage aus Kunststoffmaterial auf ihrer Oberseite eine aus Teilchen bestehende Schicht aus einem oder mehreren transparent beschichteten Aluminiumoxidteilchen aufweist, wobei diese aus Teilchen bestehende Schicht der Fußbodenauflage Rutschfestigkeit verleiht, wobei die aus Teilchen bestehende Schicht Beschichtung transparent oder halbtransparent ist, und wobei das Teilchen transparent ist.

2. Fußbodenauflage nach Anspruch 1, wobei das eine oder die mehreren Teilchen auf der Oberseite der ersten Lage frei liegen.

3. Fußbodenauflage nach Anspruch 1 oder Anspruch 2, wobei das eine oder die mehreren Teilchen mit einer haftenden Beschichtung und/oder einer getönten Beschichtung überzogen sind.

4. Fußbodenauflage nach irgendeinem der vorangehenden Ansprüche, wobei die erste Lage aus Kunststoffmaterial eine Lage aus im Wesentlichen klarem Kunststoffmaterial ist, die erste Lage vorzugsweise im Wesentlichen transparent ist.

5. Fußbodenauflage nach irgendeinem der vorangehenden Ansprüche, die eine Design-Schicht aufweist; vorzugsweise weist die Fußbodenabdeckung eine klare und/oder transparente erste Schicht auf, die auf der Oberseite einer Design-Schicht vorgesehen ist, die auf einer Oberseite einer Grundschicht vorgesehen ist; und/oder vorzugsweise eine oder mehrere im Wesentlichen transparente Grundschichten optional zwischen der ersten Schicht und der Design-Schicht angeordnet ist bzw. sind.

6. Verfahren zum Herstellen einer rutschfesten Fußbodenabdeckung, wobei das Verfahren die folgenden Schritte umfasst:
Auftragen einer ersten Schicht aus Kunststoffmaterial;
Auftragen einer aus Teilchen bestehenden Schicht aus transparenten, beschichteten Aluminiumoxidteilchen auf eine Oberseite der ersten Schicht; und
Härten des Kunststoffmaterials, so dass es eine kontinuierliche Schicht bildet; wobei die Teilchen eine Rutschfestigkeit bewirken, und wobei die Teilchenbeschichtung transparent oder halbtransparent ist, und wobei das Teilchen transparent ist.

7. Verfahren nach Anspruch 6, wobei das Kunststoffmaterial, das verwendet wird, um die erste Schicht aus Kunststoffmaterial zu bilden, im Wesentlichen frei ist von Polymerteilchen, die eine Rutschfestigkeit bewirken.

8. Verfahren nach Anspruch 6 oder Anspruch 7, das einen Schritt umfasst, in dem zumindest eine Grundschicht aufgetragen wird, wobei die erste Schicht eine Beschichtungsschicht ist, die auf eine Oberseite der Grundschicht aufgetragen wird.

9. Verfahren nach Anspruch 8, wobei die Beschichtungsschicht ein thermoplastisches oder vernetzbares Polymer oder Copolymer aufweist.

10. Verfahren nach irgendeinem der Ansprüche 6 bis 9, wobei die erste Schicht ein Kunststoffmaterial, wie ein thermoplastisches oder duroplastisches Polymer aufweist; vorzugsweise weist die erste Schicht ein PVC-Plastisol oder weichgemachtes Acrylmaterial auf.

11. Verfahren nach irgendeinem der Ansprüche 7 bis 10, wobei die erste Schicht aus Kunststoffmaterial eine Schicht aus im Wesentlichen klarem Kunststoffmaterial ist, wobei die erste Schicht vorzugsweise im Wesentlichen transparent ist.

12. Verfahren nach Anspruch 11, das einen Schritt des Auftragens einer Design-Schicht umfasst, und wobei die erste Schicht aus im Wesentlichem klarem Kunststoffmaterial auf eine Oberseite der Design-Schicht aufgetragen wird; vorzugsweise umfasst das Verfahren die folgenden Schritte:
Auftragen einer Grundschicht;
Auftragen einer Design-Schicht auf eine Oberseite der Grundschicht; und
Auftragen einer ersten Schicht auf eine Oberseite der Grundschicht.

13. Verfahren nach Anspruch 12, das einen Schritt des Auftragens einer oder mehrerer im Wesentlichen transparenter Grundschichten auf die Oberseite der Design-Schicht umfasst.

14. Verfahren nach irgendeinem der Ansprüche 6 bis 13, wobei die Schritte hintereinander ausgeführt werden.

## Revendications

1. Un revêtement de sol en plastique antidérapant possédant une première couche de matériau plastique, ladite première couche de matériau plastique possédant sur sa surface supérieure une couche particulaire d'une ou de plusieurs particules d'oxyde d'aluminum enduites transparentes, ladite couche particulaire conférant une résistance au glissement au revêtement de sol où l'enduit particulaire est transparent ou semi-transparent et où la particule est transparente.

2. Un revêtement de sol selon la Revendication 1 où les unes ou plusieurs particules sont exposées sur la surface supérieure de la première couche.

3. Un revêtement de sol selon la Revendication 1 ou 2 où les unes ou plusieurs particules sont enduites avec un enduit d'adhésion et/ou un enduit teinté.

4. Un revêtement de sol selon l'une quelconque des Revendications précédentes où la première couche de matériau plastique est une couche de matériau plastique sensiblement incolore, de préférence la première couche est sensiblement transparente.

5. Un revêtement de sol selon l'une quelconque des Revendications précédentes qui comprend une couche de conception, de préférence le revêtement de sol comprend une première couche incolore et/ou transparente placée sur une surface supérieure d'une couche de conception qui est placée sur une surface supérieure d'une couche de base, et/ou de préférence une ou plusieurs couches de base sensiblement transparentes sont éventuellement placées entre la première couche et la couche de conception.

6. Un procédé de fabrication d'un revêtement de sol antidérapant, ledit procédé comprenant les opérations suivantes :
l'application d'une première couche de matériau plastique,
l'application d'une couche particulaire de particules d'oxyde d'aluminum enduites transparentes sur une surface supérieure de la première couche, et
le durcissement du matériau plastique de sorte qu'il forme un film continu, où les particules fournissent un effet antidérapant et où l'enduit particulaire est transparent ou semi-transparent et où la particule est transparente.

7. Un procédé selon la Revendication 6 où le matériau plastique utilisé pour former la première couche de matériau plastique est sensiblement exempte de particules polymères qui fournissent un effet antidérapant.

8. Un procédé selon la Revendication 6 ou 7 qui comprend une opération d'application d'au moins une couche de base où la première couche est une couche d'enduit qui est appliquée à une surface supérieure de la couche de base.

9. Un procédé selon la Revendication 8 où la couche d'enduit contient un polymère ou un copolymère thermoplastique ou réticulable.

10. Un procédé selon l'une quelconque des Revendications 6 à 9 où la première couche contient un matériau plastique tel qu'un polymère thermoplastique ou thermodurci, de préférence la première couche contient un plastisol PVC ou un matériau acrylique plastifié.

11. Un procédé selon l'une quelconque des Revendications 7 à 10 où la première couche de matériau plastique est une couche de matériau plastique sensiblement incolore, de préférence la première couche est sensiblement transparente.

12. Un procédé selon la Revendication 11 qui comprend une opération d'application d'une couche de conception et où la première couche de matériau plastique sensiblement incolore est appliquée à une surface supérieure de la couche de conception, de préférence le procédé comprend les opérations suivantes :
l'application d'une couche de base,
l'application d'une couche de conception sur une surface supérieure de la couche de base, et
l'application d'une première couche sur une surface supérieure de la couche de conception.

13. Un procédé selon la Revendication 12 qui comprend une opération d'application d'une ou de plusieurs couches de base sensiblement transparentes sur la surface supérieure de la couche de conception.

14. Un procédé selon l'une quelconque des Revendications 6 à 13 où les opérations sont exécutées séquentiellement.
